# EUROPÄISCHE PATENTSCHRIFT

(11) **EP 2 150 690 B1**
(45) Veröffentlichungstag und Bekanntmachung des Hinweises auf die Patenterteilung: **22.02.2012**
(21) Anmeldenummer: 08759792.8
(22) Anmeldetag: 20.05.2008
(51) Int. Cl.: F01N 3/20

(54) **ELEKTRISCH BEHEIZBARER WABENKÖRPER MIT ZONEN ERHÖHTER WIDERSTÄNDE**
ELECTRICALLY HEATABLE HONEY-COMB STRUCTURE HAVING ZONES OF INCREASED RESISTANCE
CORPS EN NID D'ABEILLES POUVANT ÊTRE CHAUFFÉ ÉLECTRIQUEMENT, POURVU DE ZONES DE RÉSISTANCE ACCRUE

(30) Priorität: 31.05.2007 DE 102007025418
(43) Veröffentlichungstag der Anmeldung: 10.02.2010
(73) Patentinhaber: Emitec Gesellschaft für Emissionstechnologie mbH, 53797 Lohmar (DE)
(72) Erfinder: KONIECZNY, Jörg-Roman, 53804 Much (DE); BRÜCK, Rolf, 51429 Bergisch Gladbach (DE); HODGSON, Jan, 53840 Troisdorf (DE)
(74) Vertreter: Rössler, Matthias
(86) Internationale Anmeldenummer: PCT/EP2008/056180
(87) Internationale Veröffentlichungsnummer: WO 2008/145567

(56) Entgegenhaltungen:
- EP-A- 0 567 034
- WO-A-92/02714
- WO-A-92/13635
- DE-A1- 4 303 601
- US-A- 5 554 342

## Beschreibung

Die vorliegende Erfindung betrifft einen Wabenkörper, der aus einem gewundenen Stapel teilweise strukturierter Blechfolien gebildet ist, wobei der Stapel über einen elektrischen Anschluss verfügt, so dass ein Pfad zur Leitung eines elektrischen Stromes durch den Wabenkörper zu dessen Beheizung vorliegt.

Die Entwicklung elektrisch beheizbarer metallischer Wabenkörper wurde in den letzten 20 Jahren maßgeblich von der Anmelderin vorangetrieben. So kann beispielsweise auf die WO 92/02714 A1 verwiesen werden. Dort ist ein Wabenkörper beschrieben, der aus lagenweise angeordneten zumindest teilweise strukturierten Blechen aufgebaut ist, die eine Vielzahl von für ein Abgas durchströmbare Kanäle bilden, welche von der einen Stirnseite zur anderen verlaufen. Zudem sind mehrere, in Richtung von einer Stirnseite zur anderen, verlaufende flächige Spalte und/oder elektrisch isolierende Schichten so positioniert, dass sich zumindest ein zusammenhängender elektrisch leitfähiger und in einer Querschnittsebene verlaufender Strompfad ergibt. Die Bleche sind mit ihrem einen Ende an einem ersten Anschlusskontakt und an ihrem zweiten Ende an dem zweiten Anschlusskontakt elektrisch leitend angebunden. Auf diese Weise wird insbesondere ermöglicht, eine Stromzufuhr und Abfuhr im Wesentlichen in einer Ebene zu realisieren.

Ein weiterer Wabenkörper ist aus der WO 92/13635 A1 bekannt, der durch eine gezielte lokale Erhöhung des elektrischen Widerstandes den Pfad des elektrischen Stromes durch den Wabenkörper so steuern kann, dass in entsprechenden Bereichen der Blechlagen Zonen gebildet werden können, die durch den elektrischen Strom in erhöhtem Maße beheizt werden, so dass eine inhomogene Beheizung des Wabenkörpers möglich ist.

Die langjährige Praxis im Gebrauch von Wabenkörpern als Heizkatalysatoren hat nun gezeigt, dass der Strom sich teilweise nicht gleichmäßig entlang der einzelnen Blechfolien eines Stapels ausbreitet, sondern sich bei gewundenen oder auch spiralförmig gewickelten Wabenkörpern den kürzesten Weg zwischen dem elektrischen Anschluss und der elektrischen Masse sucht. Dabei werden insbesondere die Kontaktflächen zwischen strukturierten und glatten Blechen genutzt, durch die der Strom insbesondere in Krümmungsbereichen von einem äußeren Blech auf das innere Blech überspringen und sich somit den kürzesten Strompfad suchen kann. Dadurch kommt es zu unterschiedlichen Verteilungen der Stromdichte über den Querschnitt des Wabenkörpers und somit auch zu einer ungewollten inhomogenen Wärmeverteilung.

Insbesondere bei großen Wabenkörpern, die in jüngerer Zeit verstärkt eingesetzt werden, kommt es infolge großer Stapelhöhen zu einer Verstärkung der ungleichmäßigen Erwärmung bezogen auf den Querschnitt der Wabenkörper. Aufgrund der Größe ist hier auch der Effekt der Wärmekonvektion sehr viel geringer als bei kleiner gebauten Wabenkörper, so dass mit weniger elektrischem Strom beaufschlagte Bereiche des Wabenkörpers auch deutlich länger kühl bleiben.

Aufgabe der Erfindung ist es daher, die mit Bezug auf den Stand der Technik geschilderten Probleme zumindest teilweise zu lösen und insbesondere einen Wabenkörper bereitzustellen, der eine gleichmäßige Erwärmung über den gesamten Querschnitt des Wabenkörpers ermöglicht. Gleichzeitig soll auch ein Wabenköper angegeben werden, der aufgrund einer gleichmäßigen Strombelastung trotz häufigeren Einsatzes (beispielsweise in einem Abgassystem eines Kraftfahrzeuges) eine längere Standzeit aufweist.

Diese Aufgaben werden gelöst durch einen Wabenkörper gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die in den Unteransprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Zur Lösung dieser Aufgabe ist der erfindungsgemäße Wabenkörper mit wenigstens einem gewundenen Stapel Blechfolien gebildet, wobei ein erstes Ende des Stapels mit einem elektrischen Anschluss und ein zweites Ende mit einer elektrischen Masse verbunden ist, wobei
- der wenigstens eine Stapel eine Mehrzahl von miteinander in elektrischem Kontakt stehenden Blechfolien hat,
- die Blechfolien zumindest teilweise strukturiert sind und in Richtung der Strukturen eine Höhe des wenigstens einen Stapels bestimmen,
- der wenigstens eine Stapel wenigstens eine Krümmung mit einem kleinen Krümmungsradius und einem größeren Krümmungsradius hat und
- der wenigstens eine Stapel in einem Krümmungsabschnitt, welcher die wenigstens eine Krümmung umfasst, zumindest eine Zone erhöhten elektrischen Widerstands bildet, die sich, ausgehend vom kleinen Krümmungsradius, über einen Teil der Höhe des wenigstens einen Stapels erstreckt.
- wobei die Blechfolien , deren_Anordnung und/oder elektrischer Kontakt zueinander in dem Krümmung gegnüber anderen Bereichen des Stapels so verändert ist, dass es innerhalb der einen Krümmung zu einer angepassten Stromdichte über die Höhe des Stapels kommt und damit eine gleichmäßige Erwärmung im Bereich der Krümmung erreicht wird.

Der hier genannte Stapel von einer Mehrzahl miteinander in elektrischem Kontakt stehenden Blechfolien kann insbesondere mit einem elektrischen Anschluss verbunden sein, der auf einem den Wabenkörper umgebenden Gehäuse angeordnet ist, wobei dieses Gehäuse gegebenenfalls über seinen Umfang mehrere Segmente aufweisen kann, um somit jeden einzelnen Stapel unter Strom zu setzen. Weiterhin kann die Masse entweder auf dem Umfang oder auch zentral in der Mitte des Querschnittes des Wabenkörpers angeordnet sein, wobei sie mit allen Lagen verbunden sein sollte. Die beiden eingangs genannten Veröffentlichungen der Anmelderin können insbesondere auch zur Veranschaulichung und näheren Beschreibung der Stromzufuhr herangezogen werden.

Bevorzugt sind die Strukturen der Blechfolien gebildet aus Wellformen, die sich parallel zu der Längsachse bzw. der Durchströmungsrichtung des Wabenkörpers erstrecken, wobei die Wellformen insbesondere in Form von Omega- oder Sinuswellen bzw. Zickzack-artig (spitz) gestaltet sind. Grundsätzlich ist möglich, dass ein Stapel durch mehrere Blechfolien gebildet ist, die flächig aneinander anliegen, so dass die Strukturen eine Vielzahl von Strömungswegen entlang ihrer Oberfläche beispielsweise für ein Abgas bilden. Die Strukturen beabstanden somit die benachbarten Blechfolien, so dass die aneinander liegenden Blechfolien schließlich eine Höhe des gesamten Stapels bilden, die insbesondere von der Summe der Strukturhöhen und den Dicken der Blechfolien abhängt. Grundsätzlich ist möglich, dass mehrere Stapel einen Wabenkörper bilden, hier ist jedoch für einen einfachen Aufbau der Einsatz eines einzelnen Stapels (oder maximal 2 Stapel) bevorzugt, der den Querschnitt des Wabenkörpers durch seine z.B. mäanderförmige Anordnung ausfüllt.

Die zumindest eine Zone erhöhten elektrischen Widerstandes, die insbesondere im inneren Bereich einer Krümmung in den inneren Blechfolien eines Stapels aufgebaut werden soll, dient dazu den Strom davon abzuhalten sich den kürzestmöglichen Pfad auf der Innenseite der Krümmung entlang zu suchen und ihn daher bevorzugt über die äußeren Blechfolien des Stapels innerhalb des Krümmungsabschnittes zu leiten, um somit eine angepasste Stromdichte und damit eine gleichmäßige Erwärmung des Wabenkörpers auch im Bereich der Krümmung zu erreichen. Hierfür wird nun insbesondere so vorgegangen, dass beispielsweise die Blechfolien, deren Anordnung und/oder elektrischer Kontakt zueinander in einem vorgegebenen Krümmungsabschnitt gegenüber anderen Bereichen des Stapels verändert ist. In diesem Krümmungsabschnitt wird mit anderen Worten nämlich nahe des "inneren, kleineren" Krümmungsradius eine Zone mit einem erhöhten elektrischen Widerstand gegenüber einem Bereich des "äußeren, größeren" Krümmungsradius gebildet, so dass sich die Zone demnach nur über einen Teil der Höhe des Stapels erstreckt, zum Beispiel höchstens 60 % der Höhe oder sogar nur 30 % der Höhe. Bevorzugt ist dabei, dass der Anteil der Höhe, über die sich die mindestens eine Zone erstreckt, in Abhängigkeit von der Ausgestaltung der Krümmung (Krümmungsradius, Krümmungsabschnittslänge,...) gewählt ist, also z.B. zunimmt, wenn eine stärkere Krümmung vorliegt. Die Zone erstreckt sich dabei über mehrere Blechfolien hinweg, so dass diese erst in der Zusammenwirkung des elektrischen Widerstandes und/oder des elektrischen Kontaktes der einzelnen Blechfolien ausgebildet ist.

Gemäß einer Weiterbildung der Erfindung wird vorgeschlagen, dass die zumindest eine Zone mit Blechfolien gebildet ist, die einen minimalen Biegeradius kleiner 80 mm aufweisen. Bevorzugt wird die Zone sogar erst dann bzw. nur bei den Blechfolien ausgebildet, die im Bereich des Krümmungsabschnitt einen minimalen Biegeradius kleiner 50 mm und besonders bevorzugt kleiner 20 mm in der zumindest einen Zone aufweisen. Der Biegeradius dient als Beschreibung des Krümmungsverlaufes (der Mittelebene bzw. mittlere Fläche) einer einzelnen Blechfolie. Für den Fall, dass eine strukturierte Blechfolie betrachtet wird, wird der Krümmungsverlauf der Mittelebene betrachtet. Innerhalb des Krümmungsabschnitts kann der Biegeradius einer Blechfolie variieren, deshalb wird hier auf den minimalen Biegeradius abgestellt, wobei ggf. die Blechfolie selbst über den gesamten Krümmungsabschnitt verändert sein kann, wenn ihr minimaler Biegeradius nur an einer Stelle den vorstehenden Grenzwert unterschreitet, oder nur für genau den Stellenbereich, der einen Biegeradius kleiner z.B. 80 mm hat.

Gemäß einer weiteren erfindungsgemäßen Ausgestaltung liegt die zumindest eine Zone innerhalb eines Winkels, der von einem Ursprung des Krümmungsradius ausgeht. Mit anderen Worten weist der Wabenkörper also insbesondere zumindest eine Zone erhöhter Widerstände auf, wobei die Zone innerhalb eines Winkels liegt, der von einem Ursprung des (kleinen) Krümmungsradius ausgeht. Die Widerstände in den einzelnen Blechfolien sollten so ausgeführt sein, dass der elektrische Strom nicht vollständig aus der mindestens einen Zone herausgehalten wird, sondern nur in geringerem Maße die insbesondere nahe dem kleinsten Krümmungsradius liegenden Bleche durchläuft. Daher begrenzt dieser Winkel beispielsweise die Länge einer jeden Blechfolie, auf der die Blechfolie erhöhte elektrische Widerstände aufweist, um einen verstärkten Stromfluss aus bevorzugt durchströmten Bereichen in die vom kleinsten Krümmungsradius hin zu außen angeordneten Blechfolien eines Stapels umzuleiten. Der Winkel kann dabei konstant sein und einen Bereich von 0 bis 360° aufweisen, bevorzugt einen Bereich von 90 bis 180° und besonders bevorzugt einen Bereich von 120 bis 160°. Der Winkel kann auch abhängig von dem jeweiligen Biegeradius der Blechfolien bzw. dem (kleinsten) Krümmungsradius des Krümmungsabschnitts variieren und ist dementsprechend als Funktion des sich ändernden Biegeradius angebbar. Insbesondere ist der Winkel für Blechfolien mit kleinerem Biegeradius größer zu wählen.

Gemäß einer weiteren Ausbildung des Wabenkörpers weist zumindest ein Teil der Blechfolien im Bereich der zumindest einen Zone verschieden lange Zonenabschnitte auf. Damit ist insbesondere gemeint, dass die Zone in Richtung der Höhe des Stapels keinen stetigen Verlauf haben muss, hier also beispielsweise keine Rechteck-, Halbkreis- oder Konusförmigen Zonen ausgebildet sein müssen. Vielmehr kann (muss aber nicht) jede Blechfolie, die die mindestens eine Zone mit ausbildet, über einen vorgebbaren Bereich hinsichtlich ihres Durchströmverhaltens bzw. Kontaktverhaltens für elektrischen Strom abgewandelt sein, der ggf. auch verschieden von (allen) benachbarten Blechfolien ist.

Grundsätzlich können die Widerstände in den Blechfolien bzw. der Kontaktwiderstand mehrerer Blechfolien miteinander innerhalb der wenigstens einen Zone auf unterschiedlichste Art und Weise erhöht werden.

Gemäß einer zweckmäßigen Ausführungsform des erfindungsgemäßen Wabenkörpers unterscheiden sich zumindest ein Teil der Blechfolien in der zumindest einen Zone in ihrer Dicke. Grundsätzlich ist davon auszugehen, dass eine dickere Blechfolie einen geringeren elektrischen bzw. ohmschen Widerstand aufweist als eine dünnere Blechfolie (bei gleicher Länge und gleichem Material). Die Blechfolien können natürlich dabei durchgängig in einer jeweiligen Dicke ausgeführt sein, wobei sich dann die Blechfolien in anderen Krümmungsbereichen durch weitere Widerstände unterscheiden können, oder die Blechfolien sind jeweils aus unterschiedlich dicken Materialien zusammengesetzt.

Gemäß einer weiteren Ausführungsform ist vorgesehen, dass die Blechfolien zumindest teilweise mit einer Struktur versehen sind und sich zumindest ein Teil der Blechfolien in der zumindest einen Zone in ihren Strukturen unterscheiden. Dabei ist insbesondere gemeint, dass einerseits die strukturierten Blechfolien sich hinsichtlich der Höhe ihrer Strukturierung unterscheiden können als auch hinsichtlich ihrer Form. Zum Beispiel bieten Bleche, die Sinus- oder Omega-förmige Strukturen aufweisen, eine vergleichsweise größere Kontaktfläche zu benachbarten (vorzugsweise glatten) Blechfolien als zickzack-förmig (spitz) strukturierte Bleche. Diese unterschiedlichen Kontaktflächen führen zu größeren bzw. kleineren (Kontakt-)Widerständen hinsichtlich des Stromübergangs von einer Blechfolie zur anderen.

Gemäß einer weiteren Ausführungsform ist vorgesehen, dass zumindest ein Teil der Blechfolien wenigstens ein Element der Gruppe Löcher, Schlitze, Laschen und Strömungsumlenkungen aufweisen. Die Elemente können einzeln oder kumulativ vorgesehen sein und auch mit unterschiedlich vorgegebener Dimension verwendet werden. Insbesondere in den Blechfolien mit kleinerem Biegeradius eines Stapels können zur Ausbildung der gewünschten Zone Schlitze vorgesehen sein, die insbesondere quer zur Hauptdurchflussrichtung des elektrischen Stroms angeordnet sind, so dass der elektrische Strom hier zu längeren Wegen gezwungen und daher ein Ausweichen über benachbarte Lagen bevorzugt ist. Während Löcher und/oder Schlitze sich nur in der Ebene der Blechfolie erstrecken, treten Laschen und/oder Strömungsumlenkungen aus der Blechfolienebene hervor und können somit zusätzlich zur elektrischen Kontaktierung benachbarter Blechfolien und/oder zur Beeinflussung des Strömungsverhaltens eines Fluides (insbesondere Abgas) durch den Wabenköper bzw. dessen Kanäle genutzt werden.

Gemäß einer weiteren bevorzugten Ausführungsform der Erfindung ist innerhalb der zumindest einen Zone die Größe einer Kontaktfläche zwischen einzelnen benachbarten Blechfolien unterschiedlich. In Ergänzung zu dem bereits angeführten Merkmal sei hier angemerkt, dass die Kontaktflächen zwischen den benachbarten Oberflächen insbesondere auch unterbrochen sein können, z.B. durch Laschen, Strömungsumlenkungen, Löcher oder Schlitze, die in den Extrema der strukturierten Blechfolien oder auch in den glatten Folien im Bereich der Extrema der strukturierten Folien angeordnet sind.

Gemäß einer weiteren vorteilhaften Ausführungsform ist vorgesehen, dass wenigstens eine Blechfolie innerhalb der zumindest einen Zone wenigstens teilweise eine isolierende Beschichtung aufweist. Diese Beschichtung kann beispielhaft durch Flammspritzen, Diffusion oder andere Verfahren auf die ansonsten elektrisch leitfähigen Blechfolien aufgebracht werden und ist somit insbesondere zur Beeinflussung des Kontaktwiderstandes hin zu benachbarten Blechfolien geeignet.

Ebenfalls vorteilhaft ist es, wenn wenigstens eine Blechfolie innerhalb der zumindest einen Zone wenigstens teilweise elektrisch nichtleitendes Material umfasst. Somit kann bei Blechfolien, die innerhalb eines Stapels im Bereich des größten Krümmungsradius angeordnet sind, der Strom innerhalb der Blechfolie gehalten werden, ohne dass dieser auf weiter innen, in Richtung des kleinsten Krümmungsradius, gelegene Blechfolien ausweichen kann.

Gemäß einer weiteren vorteilhaften Ausführungsform kann zumindest ein Teil der Blechfolien innerhalb der zumindest einen Zone aus unterschiedlichen Materialien hergestellt sein. Durch die abgestimmte Auswahl geeigneter Materialien kann ein spezifischer Widerstand der Blechfolie in dieser Zone eingestellt werden. Bevorzugt ist, dass die Blechfolien einen Stahl-Grundwerkstoff aufweisen, der Chrom und/oder Aluminium und/oder Nickel in erheblichem Umfang aufweist. Die Zusammensetzung der Blechfolien, z.B. auch durch Veränderung der Oberflächen, kann demnach im Bereich der Zone von anderen Bereichen der Blechfolie verschieden ausgeführt sein.

Die Höhe des wenigstens einen Stapels des erfindungsgemäßen Wabenkörpers beträgt bevorzugt wenigstens 10 mm. In anderen Ausführungsformen kann die Höhe auch einen Wert von wenigstens 20 mm oder sogar mindestens 50 mm erreichen. Bei diesen großen Stapelhöhen tritt der Effekt der "Stromfluss-Abkürzung" in verstärktem Maße auf, so dass gerade bei dicken Stapeln ohne die hier vorgeschlagene Zone eines erhöhten elektrischen Widerstandes im Krümmungsabschnitt nur kleine innere Bereiche in Folge der ohmschen Widerstandserwärmung erwärmt werden würden. Damit ist hier bei dicken Stapeln eine besonders große Wirkung der Erfindung nachgewiesen worden.

Dabei ist der erfindungsgemäße Wabenkörper insbesondere vorgesehen für den Einsatz in einem Kraftfahrzeug. Er dient dann z.B. als Heizelement für das ihn durchströmende Abgas, eine auf ihm zumindest teilweise vorgesehene (katalytisch aktive) Beschichtung und/oder einer nachgeordneten weiteren Abgasbehandlungseinrichtung.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt sind. Es zeigen darin schematisch:
- Fig. 1:: einen Querschnitt durch einen Wabenkörper mit S-förmig gewundenen, zum Teil voneinander isolierten, Stapeln von abwechselnd glatten und gewellten Blechfolien, welche einen S-förmigen Strompfad festlegen;
- Fig. 2:: einen Querschnitt eines weiteren Wabenkörpers mit einem S-förmig gewundenen Stapel;
- Fig. 3:: einen Abschnitt einer ersten Ausführungsvariante eines Stapels;
- Fig. 4:: einen Ausschnitt einer zweiten Ausführungsvariante eines Stapels; und
- Fig. 5:: einen Ausschnitt einer dritten Ausführungsvariante eines Stapels.

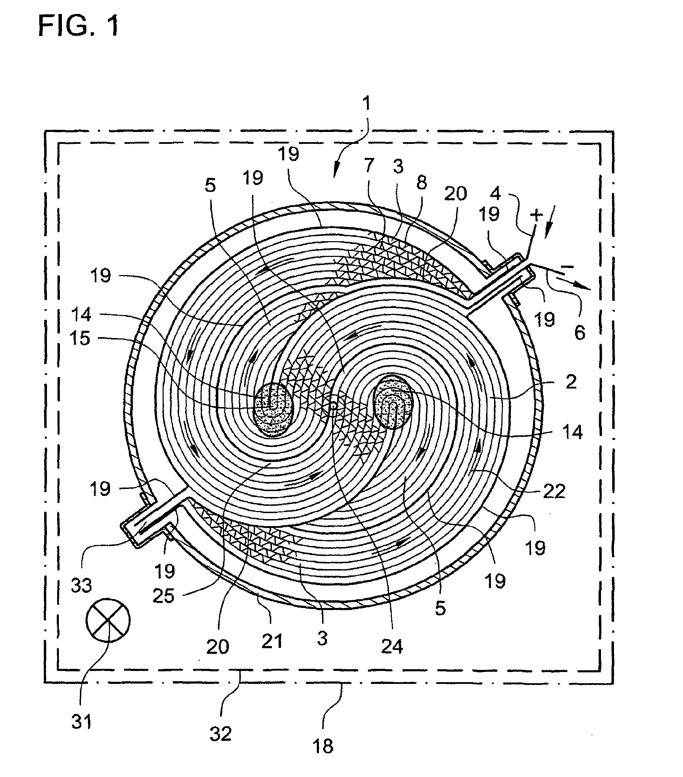

Fig. 1 zeigt einen erfindungsgemäßen Wabenkörper 1 als Bestandteil einer Abgasvorrichtung 32 eines Kraftfahrzeuges 18, wobei die Abgasströmungsrichtung 31 parallel zu der Längsachse 24 des Wabenkörpers 1 verläuft. Der Wabenkörper 1 ist dabei aus zwei Stapeln 2 aufgebaut, die jeweils aus glatten und Strukturen 8 aufweisenden Blechfolien 7 bestehen, welche abwechselnd aufeinander angeordnet sind, wobei die beiden Stapel 2 S-förmig miteinander verschlungen sind. Die beiden verschlungenen Stapel 2 sind durch eine Isolation 19 voneinander getrennt und befinden sich im Inneren eines Gehäuses 21. Die Zufuhr des elektrischen Stroms 22 geschieht über einen elektrischen Anschluss 4, die Abfuhr des Stroms 22 geschieht durch eine elektrische Masse 6. Zunächst fließt der Strom 22 über den elektrischen Anschluss 4 und die Stromverteilungsstrukturen 20, die das erste Ende 3 des ersten Stapels 2 schnabelartig umschließen, in den ersten Stapel 2 hinein und durchläuft einen S-förmigen Pfad, um von Stromverteilungsstrukturen 20 aufgenommen zu werden, welche das zweite Ende 5 des ersten Stapels 2 ebenfalls schnabelartig umschließen. Von hieraus wird der Strom 22 erneut über Stromverteilungsstrukturen 20, welche das erste Ende 3 des zweiten Stapels 2 ebenfalls schnabelartig umschließen, in den zweiten Stapel 2 eingespeist, um daraufhin gegenläufig zu dem ersten S-förmigen Pfad durch den zweiten Stapel 2 zurückzufließen, an dessen zweitem Ende 5 der Strom 22 wiederum durch Stromverteilungsstrukturen 20 aufgenommen wird, welche auch das zweite Ende 5 des zweiten Stapels 2 schnabelartig umschließen. Von hier aus wird der Strom 22 dann über die Durchführung hin zur elektrischen Masse 6 nach außen abgeleitet (der Stromfluss ist prinzipiell mit kleinen Pfeilen in Fig. 1 veranschaulicht). Ein Teil der Stromverteilungsstrukturen 20 erstreckt sich auf der der Durchführung gegenüberliegenden Seite des Gehäuses 21 in das Innere einer Aufnahme 33, wobei die Stromzuleitung 4 und die elektrische Masse 6 im Inneren dieser Kappe durch eine Isolation 19 ebenso voneinander getrennt sind wie in der Durchführung. Eine Isolation 19 (Spalt oder Isolationsmaterial) trennt auch im Inneren des Wabenkörpers 1 Teilbereiche elektrisch voneinander.

Der elektrische Strom 22 würde in der hier gezeigten Ausführungsform des Wabenkörpers 1 bevorzugt durch den Bereich der kleinsten Krümmungsradien der einzelnen Stapel 2, z.B. in unmittelbarer Nähe des Ursprungs 15 eines Krümmungsradius 11 fließen, so dass in dem Bereich des Stapels, der die größten Krümmungsradien aufweist, keine ausreichende Stromdichte vorhanden wäre, wodurch eine ungleichmäßige Erwärmung des Wabenkörpers 1 hervorgerufen werden würde. Daher sind insbesondere im Bereich der kleinsten Krümmungsradien Zonen 14 vorgesehen, in denen ein erhöhter elektrischer Widerstand vorliegt, so dass der elektrische Strom 22 zur verstärkten Durchströmung der äußeren Blechfolien 7 in dem Stapel 2 gezwungen wird. Die beschriebenen Zonen 14 unterschiedlicher Widerstände können neben der bevorzugten Anordnung in Krümmungsbereichen der Stapel 2 natürlich auch in unterschiedlichster Ausführung entlang der Längsachse 24 des Wabenkörpers 1 angeordnet sein, so dass neben der gleichmäßigen Erwärmung des gesamten Querschnitts 25 des Wabenkörpers 1 auch eine gleichmäßige und schnelle Erwärmung entlang der Längsachse 24 des Wabenkörpers 1 erreicht wird.

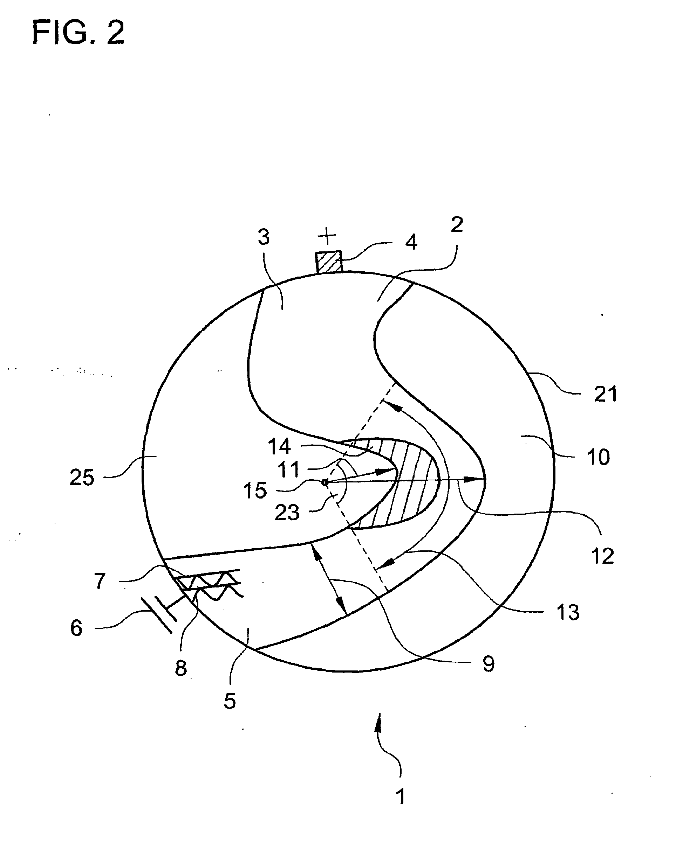

Fig. 2 zeigt ebenfalls schematisch ein weiteres Ausführungsbeispiel des Wabenkörpers 1 mit einem Querschnitt 25, wobei hier nur ein Stapel 2 zur besseren Verdeutlichung der Funktion des elektrisch beheizbaren Wabenkörpers 1 dargestellt ist. Der Stapel 2 erstreckt sich hierbei von einem, am Gehäuse 21 angeordneten, elektrischen Anschluss 4 mit einem ersten Ende 3 über einen, eine Krümmung 10 umfassenden, Krümmungsabschnitt 13 zu dem zweiten Ende 5 des Stapels 2, der mit der elektrischen Masse 6, welche ebenfalls hier im Gehäuse 21 abgegriffen wird, verbunden ist. Der Stapel 2 ist aufgebaut aus glatten bzw. strukturierten Blechfolien 7, die aufeinander angeordnet in Richtung der Ausprägung der Strukturen 8, zu einer Höhe 9 angeordnet sind, wobei der Stapel 2 im Bereich des Krümmungsabschnitts 13 einen kleinen Krümmungsradius 11 ausgehend von einem Ursprung 15 und einen großen Krümmungsradius 12 aufweist. Innerhalb des Krümmungsabschnitts 13 ist eine Zone 14 vorgesehen, die einerseits begrenzt wird von dem kleinen Krümmungsradius 11, ausgehend von dem Ursprung 15, und nur bis zu einem bestimmten Anteil der Höhe 9 des Stapels 2 reicht und weiterhin innerhalb eines Winkels 23 liegt.

Innerhalb dieser Zone 14 sind mit den Blechfolien 7 zusammen elektrische Widerstände derart gebildet, dass der Strom 22 insbesondere nicht über den denkbar kürzesten Weg entlang des kleinen Krümmungsradius 11 fließt, sondern vielmehr durch die Zone 14 in die äußeren Blechfolien 7 in der Nähe des großen Krümmungsradius 12 so abgeleitet wird, dass es zu einer angepassten Stromdichte und damit gleichmäßigen Erhitzung des gesamten Stapelquerschnitts kommt.

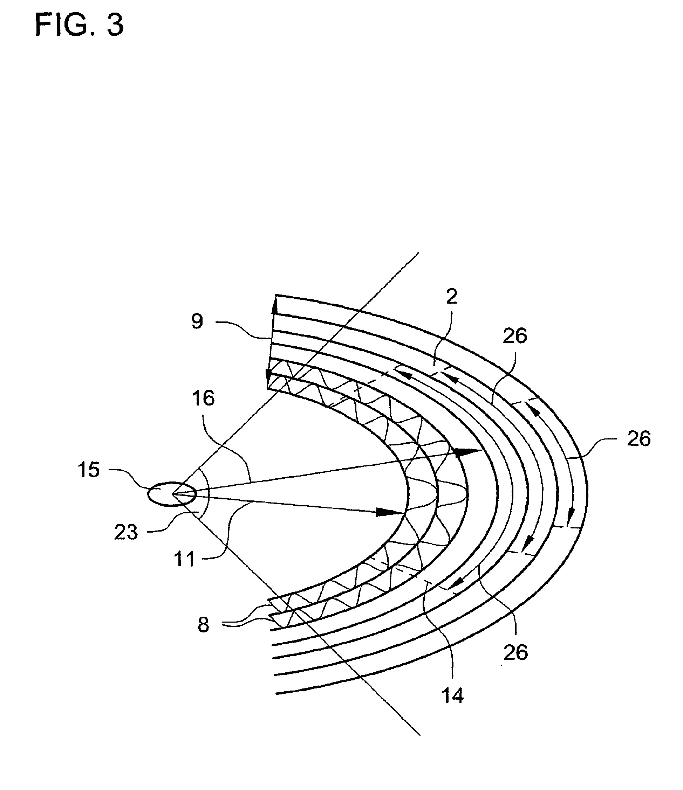

Fig. 3 zeigt schematisch einen Abschnitt eines Stapels 2 mit einer Höhe 9 und einer Zone 14 (die von der gestrichelten Linie begrenzt wird), die aus einzelnen Zonenabschnitten 26 der Blechfolien 7 ausgebildet ist. Dabei sind die Zonenabschnitte 26 je Blechfolie 7 unterschiedlich lang. Die Zonenabschnitte 26 sind hier innerhalb eines Winkels 23 angeordnet, der sich von einem Ursprung 15 eines kleinen Krümmungsradius 11 der innersten Blechfolie 7 eines Stapels aufspannt. Die einzelnen Blechfolien 7 können unterschiedliche Strukturen 8 aufweisen, damit so bevorzugte Kontaktflächen 29 mit entsprechenden Übergangswiderständen gebildet werden. Die einzelnen Blechfolien 7 eines Stapels 2 weisen jeweils einen Biegeradius 16 auf, der sich entlang der Blechfolie 7 auch innerhalb desselben Krümmungsabschnitts 13 verändern kann.

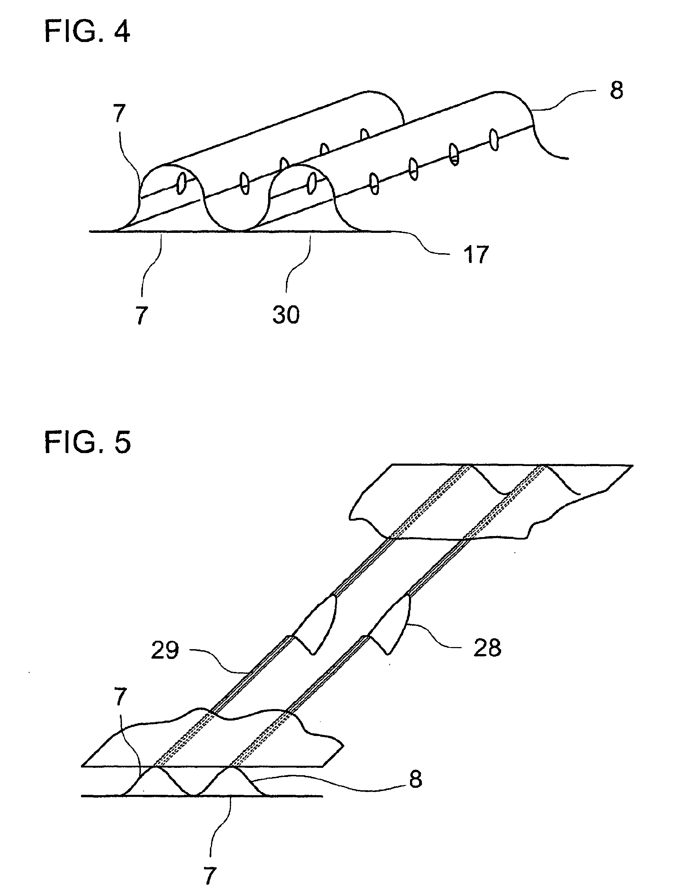

Fig. 4 zeigt schematisch einen Ausschnitt eines Stapels 2, wobei die Blechfolien 7 teilweise wellenförmige Strukturen 8 aufweisen und zusätzlich Löcher 27, die auch als langgestreckte Schlitze ausgeführt sein können. Weiterhin ist die glatte Blechfolie 7 in diesem Beispiel mit einer isolierenden Beschichtung 30 versehen und weist eine Dicke 17 auf.

Fig. 5 zeigt schematisch einen weiteren Ausschnitt eines Stapels 2, wobei die Blechfolien 7 teilweise Strukturen 8 aufweisen sowie Strömungsumlenkungen 28. Die wellenförmigen Strukturen 8 sind über Kontaktflächen 29 elektrisch leitend mit den glatten Blechfolien 7 verbunden. Der Übergangswiderstand zwischen den Blechfolien 7 wird hier über fehlende Kontaktflächen 29 im Bereich der Strömungsumlenkungen 28 erhöht.

Die hier gezeigten unterschiedlichen Ausführungsformen von Wabenkörpern zeigen nur eine begrenzte Auswahl von Ausführungsformen hinsichtlich der Windung oder der Stromversorgung oder sonstiger Details des Wabenkörpers.

### Bezugszeichenliste

- 1: Wabenkörper
- 2: Stapel
- 3: erstes Ende
- 4: elektrischer Anschluss
- 5: zweites Ende
- 6: elektrische Masse
- 7: Blechfolie
- 8: Strukturen
- 9: Höhe
- 10: Krümmung
- 11: kleiner Krümmungsradius
- 12: großer Krümmungsradius
- 13: Krümmungsabschnitt
- 14: Zone
- 15: Ursprung
- 16: Biegeradius
- 17: Dicke
- 18: Kraftfahrzeug
- 19: Isolation
- 20: Stromverteilungsstrukturen
- 21: Gehäuse
- 22: Strom
- 23: Winkel
- 24: Längsachse
- 25: Querschnitt
- 26: Zonenabschnitte
- 27: Löcher
- 28: Strömungsumlenkungen
- 29: Kontaktfläche
- 30: isolierende Beschichtung
- 31: Abgasströmungsrichtung
- 32: Abgasvorrichtung
- 33: Aufnahme

## Patentansprüche

1. Wabenkörper (1), der mit wenigstens einem gewundenen Stapel (2) Blechfolien (7) gebildet ist, wobei ein erstes Ende (3) des Stapels (2) mit einem elektrischen Anschluss (4) und ein zweites Ende (5) mit einer elektrischen Masse (6) verbunden ist, wobei
- der wenigstens eine Stapel (2) eine Mehrzahl von miteinander in elektrischem Kontakt stehenden Blechfolien (7) hat,
- die Blechfolien (7) zumindest teilweise strukturiert sind und in Richtung der Strukturen (8) eine Höhe (9) des wenigstens einen Stapels (2) bestimmen,
- der wenigstens eine Stapel (2) wenigstens eine Krümmung (10) mit einem kleinen Krümmungsradius (11) und einem großen Krümmungsradius (12) hat, **dadurch gekennzeichnet, dass**
- der wenigstens eine Stapel (2) in einem Krümmungsabschnitt (13), welcher die wenigstens eine Krümmung (10) umfasst, zumindest eine Zone (14) erhöhten elektrischen Widerstandes bildet, die sich, ausgehend vom kleinen Krümmungsradius (11), über einen Teil der Höhe (9) des wenigstens einen Stapels (2) erstreckt, wobei die Blechfolien (7), deren Anordnung und/oder elektrischer Kontakt zueinander in dem Krümmungsabschnitt (13) gegenüber anderen Bereichen des Stapels so verändert ist, dass es innerhalb der einen Krümmung (10) zu einer angepassten Stromdichte über die Höhe (9) des Stapels (2) kommt und damit eine gleichmäßige Erwärmung im Bereich der Krümmung (10) erreicht wird.
Unterstreichung nicht ausdrudeen

2. Wabenkörper (1) nach Patentanspruch 1, wobei die zumindest eine Zone (14) mit Blechfolien (7) gebildet ist, die einen minimalen Biegeradius (16) kleiner 80 mm in der zumindest einen Zone (14) aufweisen.

3. Wabenkörper (1) nach Patentanspruch 1 oder 2, wobei die zumindest eine Zone (14) innerhalb eines Winkels (23) liegt, der von einem Ursprung (15) des Krümmungsradius (11) ausgeht.

4. Wabenkörper (1) nach einem der vorhergehenden Patentansprüche, wobei zumindest ein Teil der Blechfolien (7) im Bereich der zumindest einen Zone (14) verschieden lange Zonenabschnitte (26) aufweist.

5. Wabenkörper (1) nach einem der vorhergehenden Patentansprüche, wobei sich zumindest ein Teil der Blechfolien (7) in der zumindest einen Zone (14) in ihrer Dicke (17) unterscheiden.

6. Wabenkörper (1) nach einem der vorhergehenden Patentansprüche, wobei die Blechfolien (7) zumindest teilweise mit einer Struktur (8) versehen und sich zumindest ein Teil der Blechfolien (7) in der zumindest einen Zone (14) in ihren Strukturen (8) unterscheiden.

7. Wabenkörper (1) nach einem der vorhergehenden Patentansprüche, wobei zumindest ein Teil der Blechfolien (7) wenigstens ein Element der Gruppe Löcher (27), Schlitze, Laschen und Strömungsumlenkungen (28) aufweisen.

8. Wabenkörper (1) nach einem der vorhergehenden Patentansprüche, wobei innerhalb der zumindest einen Zone (14) die Größe einer Kontaktfläche (29) zwischen einzelnen benachbarten Blechfolien (7) unterschiedlich ist.

9. Wabenkörper (1) nach einem der vorhergehenden Patentansprüche, wobei wenigstens eine Blechfolie (7) innerhalb der zumindest einen Zone (14) wenigstens teilweise eine isolierende Beschichtung (30) aufweist.

10. Wabenkörper (1) nach einem der vorhergehenden Patentansprüche, wobei wenigstens eine Blechfolie (7) innerhalb der zumindest einen Zone (14) wenigstens teilweise elektrisch nichtleitendes Material umfasst.

11. Wabenkörper (1) nach einem der vorhergehenden Patentansprüche, wobei wenigstens ein Teil der Blechfolien (7) innerhalb der zumindest einen Zone (14) aus unterschiedlichen Materialien sind.

12. Wabenkörper (1) nach einem der vorhergehenden Patentansprüche, wobei die Höhe (9) des wenigstens einen Stapels (2) wenigstens 10 mm beträgt.

13. Kraftfahrzeug (18), aufweisend wenigstens einen Wabenkörper (1) nach einem der vorhergehenden Patentansprüche.

## Claims

1. Honeycomb body (1) which is formed with at least one wound stack (2) of sheet-metal foils (7), wherein a first end (3) of the stack (2) is connected to an electrical terminal (4), and a second end (5) is connected to an electrical earth (6), wherein
- the at least one stack (2) has a plurality of sheet-metal foils (7) which are in electrical contact with one another,
- the sheet-metal foils (7) are at least partially structured and determine, in the direction of the structures (8), a height (9) of the at least one stack (2),
- the at least one stack (2) has at least one curvature (10) with a small radius (11) of curvature and a large radius (12) of curvature,
**characterized in that**
- the at least one stack (2) forms, in a curvature section (13) which comprises the at least one curvature (10), at least one zone (14) with increased electrical resistance, which zone (14) extends starting from the small radius (11) of curvature over part of the height (9) of the at least one stack (2), wherein the sheet-metal foils (7), their arrangement and/or electrical contact with one another is changed in the curvature section (13) compared to other regions of the stack **in that** way that, in the at least one curvature (10), an adapted current density is achieved over the height (9) of the stack (2) and therefore homogenous heating in the region of the curvature (10) is achieved.

2. Honeycomb body (1) according to claim 1, wherein the at least one zone (14) is formed with sheet-metal foils (7) which have a minimum bending radius (16) which is less than 80 mm in the at least one zone (14).

3. Honeycomb body (1) according to claim 1 or 2, wherein the at least one zone (14) lies within an angle (23) which starts from an origin (15) of the radius (11) of curvature.

4. Honeycomb body (1) according to one of the preceding claims, wherein at least some of the sheet-metal foils (7) have zone sections (26) of different lengths in the region of the at least one zone (14).

5. Honeycomb body (1) according to one of the preceding claims, wherein at least some of the sheet-metal foils (7) differ in their thickness (17) in the at least one zone (14).

6. Honeycomb body (1) according to one of the preceding claims, wherein the sheet-metal foils (7) are provided at least partially with a structure (8), and at least some of the sheet-metal foils (7) differ in their structures (8) in the at least one zone (14).

7. Honeycomb body (1) according to one of the preceding claims, wherein at least some of the sheet-metal foils (7) have at least one element from the group comprising holes (27), slots, flaps and flow diverters (28).

8. Honeycomb body (1) according to one of the preceding claims, wherein the size of a contact face (29) between individual adjacent sheet-metal foils (7) is different within the at least one zone (14).

9. Honeycomb body (1) according to one of the preceding claims, wherein at least one sheet-metal foil (7) has at least partially an insulating coating (30) within the at least one zone (14).

10. Honeycomb body (1) according to one of the preceding claims, wherein at least one sheet-metal foil (7) comprises at least partially electrically non-conductive material within the at least one zone (14).

11. Honeycomb body (1) according to one of the preceding claims, wherein at least some of the sheet-metal foils (7) are made of different materials within the at least one zone (14).

12. Honeycomb body (1) according to one of the preceding claims, wherein the height (9) of the at least one stack (2) is at least 10 mm.

13. Motor vehicle (18) having at least one honeycomb body (1) according to one of the preceding claims.

## Revendications

1. Corps en nids d'abeilles (1) qui est formé avec au moins une pile enlacée (2) de feuilles de tôle (7), une première extrémité (3) de la pile (2) étant reliée à une connexion électrique (4) et une deuxième extrémité (5) avec une masse électrique (6),
- l'au moins une pile (2) ayant une pluralité de feuilles de tôle (7) se trouvant en contact électrique les unes avec les autres,
- les feuilles de tôle (7) étant au moins partiellement structurées et déterminant en direction des structures (8) une hauteur (9) de l'au moins une pile (2),
- l'au moins une pile (2) ayant au moins une courbure (10) avec un rayon de courbure faible (11) et avec un grand rayon de courbure (12),
**caractérisé en ce que**
- l'au moins une pile (2) dans une section de courbure (13) qui comprend l'au moins une courbure (10), forme au moins une zone (14) de résistance électrique accrue (14), qui s'étend depuis le rayon de courbure faible (11) en passant par une partie de la hauteur (9) de l'au moins une pile (2), les feuilles de tôle (7), dont l'agencement et/ou le contact électrique l'une par rapport à l'autre étant modifié de façon telle dans la section de courbure (13) par rapport à d'autres régions de la pile qu' à l'intérieur de l'une courbure (10) une densité de courant adaptée est créée sur la hauteur (9), et pour qu'on obtienne ainsi un réchauffement uniforme dans la région de la courbure.

2. Corps en nids d'abeilles (1) selon la revendication 1, dans le cas duquel l'au moins une zone (14) est formée avec des feuilles de tôle (7) qui ont un rayon de courbure minimalement (16) plus petit que 80 mm dans l'au moins une zone (14).

3. Corps en nids d'abeilles (1) selon la revendication 1 ou 2, l'au moins une zone (14) se trouvant à l'intérieur d'un angle (23), qui émane d'une origine (15) du rayon de courbure (11).

4. Corps en nids d'abeilles (1) selon l'une des revendications précédentes, au moins une partie des feuilles métalliques (7) ayant dans la région de l'au moins une zone (14) des tronçons de zones (26) de longueurs différentes.

5. Corps en nids d'abeilles (1), selon l'une des revendications précédentes, au moins une partie des feuilles de tôle (7) dans l'au moins une zone (14) étant différente quant à leur épaisseur (17).

6. Corps en nids d'abeilles (1) selon l'une des revendications précédentes, les feuilles de tôle (7) étant au moins partiellement pourvues d'une structure (8) et au moins une partie des feuilles de tôle (7) dans l'au moins une zone (14) étant différentes quant à leurs structures (8).

7. Corps en nids d'abeilles (1) selon l'une des revendications précédentes, au moins une partie des feuilles de tôle (7) ayant au moins un élément du groupe contenant des trous (27), des fentes, des joues et des déviations de flux (28).

8. Corps en nids d'abeilles (1) selon l'une des revendications précédentes, à l'intérieur de l'au moins une zone (14) la taille d'une surface de contact (29) entre des feuilles de tôle individuelles adjacentes (7) étant différentes.

9. Corps en nids d'abeilles (1) selon l'une des revendications précédentes, au moins une feuille de tôle (7) étant pourvue au moins partiellement d'un revêtement isolant (30) à l'intérieur de l'au moins une zone (14).

10. Corps en nids d'abeilles (1) selon l'une des revendications précédentes, au moins une feuille de tôle (7) comprenant à l'intérieur de l'au moins une zone (14) au moins partiellement du matériau sans conductibilité électrique

11. Corps en nids d'abeilles (1) selon l'une des revendications précédentes, au moins une partie des feuilles de tôle (7) à l'intérieur de l'au moins une zone (14) étant de matériaux différents.

12. Corps en nids d'abeilles (1) selon l'une des revendications précédentes, l'hauteur (9) de l"au moins une pile (2) étant au moins 10 mm.

13. Véhicule automobile (18), comportant au moins un corps en nids d'abeilles (1) selon l'une des revendications précédentes.
